# EUROPÄISCHE PATENTSCHRIFT

(11) **EP 3 263 370 B1**
(45) Veröffentlichungstag und Bekanntmachung des Hinweises auf die Patenterteilung: **20.01.2021**
(21) Anmeldenummer: 17174336.2
(22) Anmeldetag: 02.06.2017
(51) Int. Cl.: B60D 1/36, B60D 1/62, B60R 1/00

(54) **ASSISTENZVERFAHREN UND ANKUPPELASSISTENT ZUM ANKUPPELN EINES KRAFTFAHRZEUGES AN EINEN ANHÄNGER**
ASSISTANCE METHOD AND COUPLING ASSISTANT FOR COUPLING A MOTOR VEHICLE TO A TRAILER
PROCÉDÉ D'ASSISTANCE ET ASSISTANT DE COUPLAGE DESTINÉ À COUPLER UN VÉHICULE AUTOMOBILEET UNE REMORQUE

(30) Priorität: 29.06.2016 DE 102016211785
(43) Veröffentlichungstag der Anmeldung: 03.01.2018
(73) Patentinhaber: VOLKSWAGEN AKTIENGESELLSCHAFT, 38440 Wolfsburg (DE)
(72) Erfinder: Hüger, Philipp, 38471 Rühen (DE); Brosig, Stefan, 29386 Hankensbüttel (DE)

(56) Entgegenhaltungen:
- US-A1- 2011 001 614
- US-A1- 2016 023 601
- US-B2- 7 777 615

## Beschreibung

Die Erfindung betrifft ein Assistenzverfahren zum Ankuppeln eines Kraftfahrzeuges an einen Anhänger nach dem unabhängigen Verfahrensanspruch, wobei das Kraftfahrzeug mit einer Anhängerkupplung, mindestens einer Kamera, einem Display, und einer Elektronikeinheit ausgeführt ist, und wobei der Anhänger mit einer Deichsel für die Anhängerkupplung ausgeführt ist. Ferner betrifft die Erfindung einen entsprechenden Ankuppelassistent für ein Kraftfahrzeug mit einer Anhängerkupplung nach dem unabhängigen Vorrichtungsanspruch.

Zum Ankuppeln eines Anhängers an ein Kraftfahrzeug ist es notwendig, zielgerichtet mit dem Kraftfahrzeug zu einer Deichsel des Anhängers zu fahren. Es sind Kraftfahrzeuge bekannt, die über eine Kamera, beispielsweise eine Rückfahrkamera, verfügen, die einen Bereich hinter dem Kraftfahrzeug und eine darin liegende Deichsel des Anhängers bildlich erfassen kann. Zudem weisen solche Kraftfahrzeuge ein Display auf, welches beispielsweise in einem Armaturenbrett des Kraftfahrzeuges angeordnet sein kann, um die durch die Kamera erfassten Bilder darzustellen. Ein Fahrer kann dabei händisch die auf dem Display dargestellte Deichsel berühren und somit markieren, um ein Anfahrmanöver zum Ankuppeln des Anhängers an die Deichsel auszulösen. Ein solches Kraftfahrzeug ist beispielsweise aus der US 7,777,615 B2 bekannt. Dabei hat sich jedoch als Nachteil herausgestellt, dass sich beim händischen Markieren am Display hohe Toleranzen ergeben. Zum Markieren benutzt der Fahrer normalerweise seine Finger. Dabei ist es mit einer durchschnittlichen Fingerbreite von ca. 1 cm zu rechnen. Eine solche Markierung am Display weist nachteiligerweise eine hohe Ungenauigkeit in Bezug auf die Position der Deichsel in der Realität auf. Außerdem ist es nachteilig, dass die Genauigkeit der Markierung am Display auf die Pixelauflösung des Displays beschränkt ist. Diese Ungenauigkeit der Markierung kann dazu führen, dass mehrere Versuche zum Ankuppeln scheitern können. Weitere beispielhafte Assistenzverfahren zum Ankuppeln eines Fahrzeuges an einen Anhänger sind in der US 2011/0001614 A1 oder US 2016/0023601 A1 beschrieben.

Deswegen ist es Aufgabe der vorliegenden Erfindung, mindestens einen aus dem Stand der Technik bekannten Nachteil zumindest zum Teil zu überwinden. Insbesondere ist es Aufgabe der vorliegenden Erfindung, ein verbessertes Assistenzverfahren zum Ankuppeln eines Kraftfahrzeuges an einen Anhänger und einen entsprechenden Ankuppelassistent für ein Kraftfahrzeug mit einer Anhängerkupplung bereitzustellen, die ein zielgerichtetes und präzises Ankuppeln ermöglichen.

Die voranstehende Aufgabe wird durch ein Assistenzverfahren zum Ankuppeln eines Kraftfahrzeuges an einen Anhänger nach dem unabhängigen Verfahrensanspruch gelöst, wobei das Kraftfahrzeug mit einer Anhängerkupplung, mindestens einer Kamera, einem Display und einer Elektronikeinheit ausgeführt ist, und wobei der Anhänger mit einer Deichsel für die Anhängerkupplung ausgeführt ist, umfassend folgende Schritte:
a) Erfassen eines ersten Bildes von zumindest einer Deichsel eines Anhängers durch die Kamera,
b) Anzeigen des ersten Bildes auf dem Display,
c) Auswählen eines ersten Bereichs im ersten Bild, in welchem die Deichsel liegt, wobei dem ersten Bereich eine koordinatenabhängige Treffergenauigkeit für die Deichsel zugeordnet wird,
d) Vergrößern des ausgewählten ersten Bereichs, um ein zweites Bild herzustellen,
e) Anzeigen des zweiten Bildes auf dem Display,
f) Auswählen eines zweiten Bereichs im zweiten Bild, in welchem die Deichsel liegt, wobei dem zweiten Bereich eine höhere koordinatenabhängige Treffergenauigkeit für die Deichsel zugeordnet wird als dem ersten Bereich,
g) Bestimmen einer Trajektorie des Kraftfahrzeuges zum Ankuppeln des Anhängers unter der Annahme, dass die Deichsel sich im zweiten Bereich befindet,
und wobei im Schritt c) und im Schritt f) ein Benutzer aufgefordert wird, zu bestätigen, dass die Deichsel im ersten Bereich und/oder im zweiten Bereich liegt.

Der Erfindungsgedanke liegt dabei darin, dass beim Bestimmen einer Trajektorie zum Ankuppeln des Kraftfahrzeuges an den Anhänger eine koordinatenabhängige Treffergenauigkeit für die Deichsel im mindestens einem durch die Kamera aufgenommenen und auf dem Display angezeigten Bereich berücksichtigt wird. Die koordinatenabhängige Treffergenauigkeit für die Deichsel bedeutet im Sinne der Erfindung, dass zwecks Markierung der Deichsel am Display nicht nur die Koordinaten im Display, sondern auch als eine zusätzliche Koordinate die Entfernung von der Kamera zu einem aufzunehmenden Punkt in der Realität berücksichtigt wird. Mit der steigernden Entfernung von der Kamera zum aufzunehmenden Punkt in der Realität deckt eine durchschnittliche Fingerbreite von ca. 1 cm am Display immer einen größeren Bereich in der Realität ab. Mit der steigernden Entfernung wird folglich die zielgerichtete Ansteuerung der Anhängerkupplung an die Deichsel immer schwieriger. Erfindungsgemäß werden durch die Kamera mindestens zwei Bilder von der Deichsel des Anhängers berücksichtigt. Das erste Bild dient dabei zu einer vorläufigen Markierung der Deichsel oder mit anderen Worten zu einem vorläufigen Auswählen eines ersten Bereichs im ersten Bild, in welchem die Deichsel liegt. Der erste Bereich wird dabei rund um den Finger des Benutzers ausgewählt. Das zweite Bild wird dadurch erhalten, dass der erste Bereich auf die Displaygröße entsprechend vergrößert bzw. in den ersten Bereich hereingezoomt wird. Erst dann, nach zumindest einer Vergrößerung des ersten Bereiches, kann der Benutzer die Deichsel im zweiten vergrößerten Bild markieren, wobei die Markierung im zweiten Bild mit einer höheren Treffergenauigkeit erfolgen kann als im ersten Bild. Der zweite Bereich entspricht dabei beispielsweise einem Quadrat oder einem Kreis mit einem Durchmesser, welcher ungefähr einer Fingerbreite des Benutzers entspricht. Der zweite Bereich deckt schließlich die Deichsel mit einer vergrößerten Treffergenauigkeit ab und markiert somit die Deichsel im zweiten Bild. Der zweite Bereich wird folglich als ein Zielpunkt zum Anfahren zwecks Ankuppeln des Kraftfahrzeuges an den Anhänger ausgewählt. Somit kann der Vorteil erreicht werden, dass der Benutzer präzise und mit einer hohen Treffergenauigkeit die Deichsel im Display markieren kann, wodurch ein Anfahrmanöver zum Ankuppeln des Anhängers an die Deichsel genau zielgerichtet ausgeführt werden kann. Weiterhin ist es im Rahmen der Erfindung denkbar, dass mindestens eines oder sogar mehrere weitere Bilder und des Weiteren mindestens ein oder mehrere weitere Bereiche ausgewählt werden können, um die Markierung der Deichsel am Display noch weiter zu präzisieren. Zudem kann die Erfindung vorsehen, dass nach dem Bestimmen der Trajektorie des Kraftfahrzeuges zum Ankuppeln des Anhängers das Anfahrmanöver automatisch ausgeführt werden kann, und/oder dass diese Trajektorie für den Benutzer am Display dargestellt werden kann, und/oder dass ein entsprechender Einschlagwinkel dem Benutzer vorgeschlagen werden kann.

Im Rahmen der Erfindung ist ferner denkbar, dass im Schritt c) und/oder im Schritt f) ein Benutzer die Deichsel im ersten Bild und/oder im zweiten Bild mit einem Finger markieren kann, um den ersten Bereich und/oder den zweiten Bereich auszuwählen. Somit kann der Vorteil erreicht werden, dass der Benutzer das Assistenzverfahren zum Ankuppeln des Kraftfahrzeuges an den Anhänger aktiv steuern kann. Ferner ist es vorteilhaft, dass, wenn sich im Aufnahmebereich der Kamera mehrere Deichsel befinden und wenn eine automatische Bilderkennung zwischen den mehreren Deichseln nicht unterscheiden kann, die Auswahl der richtigen Deichsel dem Benutzer überlassen werden kann. Das Display kann dabei vorteilhafterweise als eine Schnittstelle zu einem erfindungsgemäßen Ankuppelassistent dienen.

Ferner ist es im Rahmen der Erfindung denkbar, dass im Schritt c) und/oder im Schritt f) die Deichsel im ersten Bild und/oder im zweiten Bild durch eine Bilderkennungseinheit bestimmt werden kann, um den ersten Bereich und/oder den zweiten Bereich auszuwählen. Dadurch kann der Vorteil erreicht werden, dass der Benutzer somit entlastet werden kann, und dass das Anfahrmanöver zum Ankuppeln des Anhängers an die Deichsel automatisch eingeleitet werden kann. Zudem ist es denkbar, dass in einem der Schritte c) oder f) die Bilderkennungseinheit agieren kann und in dem anderen der Benutzer. Weiterhin ist es denkbar, dass, wenn im Schritt c) und/oder im Schritt f) die Deichsel durch eine Bilderkennungseinheit bestimmt wird, der Benutzer aufgefordert werden kann, die Auswahl des ersten und/oder des zweiten Bereiches zu bestätigen. Somit kann der Vorteil erreicht werden, dass mögliche Fehler der automatischen Bilderkennungseinheit vermieden werden können.

Weiterhin ist es im Rahmen der Erfindung denkbar, dass im Schritt g) beim Bestimmen der Trajektorie des Kraftfahrzeuges zum Ankuppeln des Anhängers eine höhere koordinatenabhängige Treffergenauigkeit für die Deichsel im zweiten Bereich berücksichtigt werden kann. Vorteilhafterweise kann der Benutzer durch seine Fingerbreite im vergrößerten zweiten Bild einen Bereich in der Realität abdecken, welcher wesentlich kleiner ist als im ersten Bild. Somit kann die Markierung der Deichsel im zweiten Bild deutlich präziser erfolgen im Vergleich mit der realen Position der Deichsel als im ersten Bild. Folglich kann auch die Trajektorie des Kraftfahrzeuges zum Ankuppeln des Anhängers vorteilhafterweise genau zielgerichtet ausgeführt werden.

Erfindungsgemäß wird im Schritt e) und im Schritt f) ein Benutzer aufgefordert, zu bestätigen, dass die Deichsel im ersten Bereich und/oder im zweiten Bereich liegt. Somit kann der Vorteil erreicht werden, dass der erste Bereich und/oder der zweite Bereich nochmals durch eine aktive Mitwirkung des Benutzers überprüft werden können/kann. Sollte durch die Überprüfung festgestellt werden, dass der erste Bereich und/oder der zweite Bereich ungenau die Deichsel abdecken/abdeckt, dann kann der jeweilige Bereich erneut ausgewählt werden. Sollte außerdem durch die Überprüfung festgestellt werden, dass der zweite Bereich zu groß ist, dann kann der zweite Bereich erneut vergrößert werden, um ein drittes Bild zu erhalten, in welchem ein dritter Bereich mit der Deichsel ausgewählt werden kann. Somit kann die Erkennung der richtigen Position der Deichsel im Display verglichen mit ihrer Position in der Realität verbessert werden.

Erfindungsgemäß kann das Verfahren mindestens einen weiteren Schritt aufweisen:
h) Anzeigen der im Schritt g) bestimmten Trajektorie auf dem Display.

Somit kann die richtige Trajektorie des Kraftfahrzeuges zum Ankuppeln des Anhängers visualisiert werden. Dies erhöht vorteilhafterweise den Bedienungskomfort des Kraftfahrzeuges im Falle einer manuell ausgeführten Anfahrt. Im Falle eines automatischen Anfahrmanövers kann die Anzeige der richtigen Trajektorie im Display dem Benutzer ein sicheres Gefühl verleihen.

Weiterhin ist es erfindungsgemäß denkbar, dass das Verfahren mindestens einen weiteren Schritt aufweisen kann:
h) Automatisches Navigieren des Kraftfahrzeuges zum Ankuppeln des Anhängers gemäß der im Schritt g) bestimmten Trajektorie.

Dadurch kann der Vorteil erreicht werden, dass der Benutzer vom Ausführen eines komplizierten Anfahrmanövers zum Ankuppeln des Kraftfahrzeuges an den Anhänger entlastet werden kann.

Ferner wird die erfindungsgemäße Aufgabe durch einen Ankuppelassistent für ein Kraftfahrzeug mit einer Anhängerkupplung nach dem unabhängigen Vorrichtungsanspruch gelöst, umfassend mindestens eine Kamera, ein Display und eine Elektronikeinheit, wobei die Elektronikeinheit dazu ausgelegt ist, eine Trajektorie des Kraftfahrzeuges zum Ankuppeln eines Anhängers zu bestimmen, wobei beim Bestimmen der Trajektorie eine koordinatenabhängige Treffergenauigkeit für eine Deichsel des Anhängers in mindestens einem durch die Kamera aufgenommenen und auf dem Display angezeigten Bereich berücksichtigt wird, in welchem die Deichsel liegt. Dabei kann die Elektronikeinheit dazu ausgelegt sein, ein erstes Bild von zumindest einer Deichsel eines Anhängers durch die Kamera zu verarbeiten, automatisch oder gemäß einem Befehl vom Benutzer einen ersten Bereich im ersten Bild, in welchem die Deichsel liegt, auszuwählen und dem ersten Bereich eine koordinatenabhängige Treffergenauigkeit für die Deichsel zuzuordnen. Zudem kann die Elektronikeinheit dazu ausgelegt sein, den ausgewählten ersten Bereich zu vergrößern, um ein zweites Bild herzustellen, und anschließend das zweite Bild auf dem Display darzustellen. Ferner kann die Elektronikeinheit dazu ausgelegt sein, einen zweiten Bereich im zweiten Bild, in welchem die Deichsel liegt, auszuwählen und dem zweiten Bereich eine höhere koordinatenabhängige Treffergenauigkeit für die Deichsel zuzuordnen als dem ersten Bereich. Außerdem kann die Elektronikeinheit dazu ausgelegt sein, eine Trajektorie des Kraftfahrzeuges zum Ankuppeln des Anhängers unter der Annahme zu bestimmen, dass die Deichsel sich im zweiten Bereich befindet und gegebenenfalls ein automatisches Anfahrmanöver zum Ankuppeln des Kraftfahrzeuges an den Anhänger gemäß der bestimmten Trajektorie einzuleiten. Mit dem erfindungsgemäßen Ankuppelassistent werden des Weiteren die gleichen Vorteile erreicht, die auch im Zusammenhang mit dem erfindungsgemäßen Assistenzverfahren beschrieben wurden. Um eine Wiederholung zu vermeiden, wird hierbei vollumfänglich darauf Bezug genommen.

Weiterhin kann die Erfindung vorsehen, dass das Display ein Touch-Display sein kann, welches als eine Schnittstelle zwischen einem Benutzer und dem Ankuppelassistent dienen kann. Dabei ist es vorteilhaft, dass das Display somit ein kombiniertes Ein- und Ausgabegerät darstellen kann, welches eine Kommunikation mit der Elektronikeinheit und eine Ansteuerung des Ankuppelassistents ermöglichen kann. Durch Berührung von Teilen eines Bildes kann der Benutzer vorteilhafterweise den Ankuppelassistent direkt ansteuern.

Zudem ist es im Rahmen der Erfindung denkbar, dass die Kamera eine Rückfahrkamera sein kann. Eine Rückfahrkamera ist in den meisten Kraftfahrzeugen bereits vorhanden. Der erfindungsgemäße Ankuppelassistent kann somit mit einer vorhandenen Kamera arbeiten. Dadurch können Kosten für eine separate Kamera gespart werden. Gleichwohl ist es aber auch denkbar, dass eine spezielle Kamera im Bereich der Anhängerkupplung angeordnet sein kann. Somit kann der Vorteil erreicht werden, dass die Kamera ungefähr auf der Höhe der Deichsel liegen kann, um die zu verarbeitenden Bilder weniger auffällig für Fehlertoleranzen aufgrund eines geneigten Kamerawinkels zu machen. Zudem ist es denkbar, dass Bilder von mehreren Kameras überprüft werden können, um die richtige Position der Deichsel zu erkennen und gegebenenfalls zu verifizieren. Ferner ist es denkbar, dass Bilder von mehreren Kameras überprüft werden können, um eine perspektivische Darstellung einer Deichsel zu erhalten und eine verbesserte koordinatenabhängige Treffergenauigkeit für die Deichsel berücksichtigen zu können.

Des Weiteren ist es gemäß der Erfindung ebenfalls denkbar, dass die Elektronikeinheit eine Bilderkennungseinheit aufweisen kann, um die Deichsel in mindestens einem durch die Kamera aufgenommen und auf dem Display angezeigten Bereich automatisch aufzufinden. Dadurch kann ein automatisiertes Auffinden der Deichsel im jeweiligen Kamerabild ermöglicht werden.

Weiterhin kann die Erfindung vorsehen, dass der Ankuppelassistent in einem Einparkhilfeassistent integrierbar sein kann. Somit kann ein vorhandener Einparkhilfeassistent vorteilhafterweise verbessert und aufgerüstet werden. Hierbei ist es denkbar, dass eine entsprechende Software in einer vorhandenen Elektronikeinheit des Einparkhilfeassistenten implementiert werden kann, um das erfindungsgemäße Assistenzverfahren zum Ankuppeln des Kraftfahrzeuges an den Anhänger auszuführen.

Weitere, die Erfindung verbessernde Maßnahmen werden nachstehend mit der Beschreibung der bevorzugten Ausführungsbeispiele der Erfindung anhand der Figuren näher dargestellt. Dabei können die in den Ansprüchen und in der Beschreibung erwähnten Merkmale jeweils einzeln für sich oder in beliebiger Kombination erfindungswesentlich sein. Dabei ist zu beachten, dass die Figuren nur einen beschreibenden Charakter haben und nicht dazu gedacht sind, die Erfindung in irgendeiner Form einzuschränken. Es zeigen:
- Fig. 1: eine schematische Darstellung eines ersten Bildes einer Deichsel an einem Display,
- Fig. 2: eine tabellarische Darstellung einer Treffergenauigkeit für die Deichsel am Display in unterschiedlichen Bereichen des ersten Bildes,
- Fig. 3: eine schematische Darstellung eines zweites Bildes der Deichsel am Display,
- Fig. 4: eine tabellarische Darstellung einer Treffergenauigkeit für die Deichsel am Display in unterschiedlichen Bereichen des zweiten Bildes.

Dabei werden die gleichen Teile stets mit denselben Bezugszeichen versehen, sodass auf die einzelnen Bezugszeichen in der Regel nur einmal Bezug genommen wird.

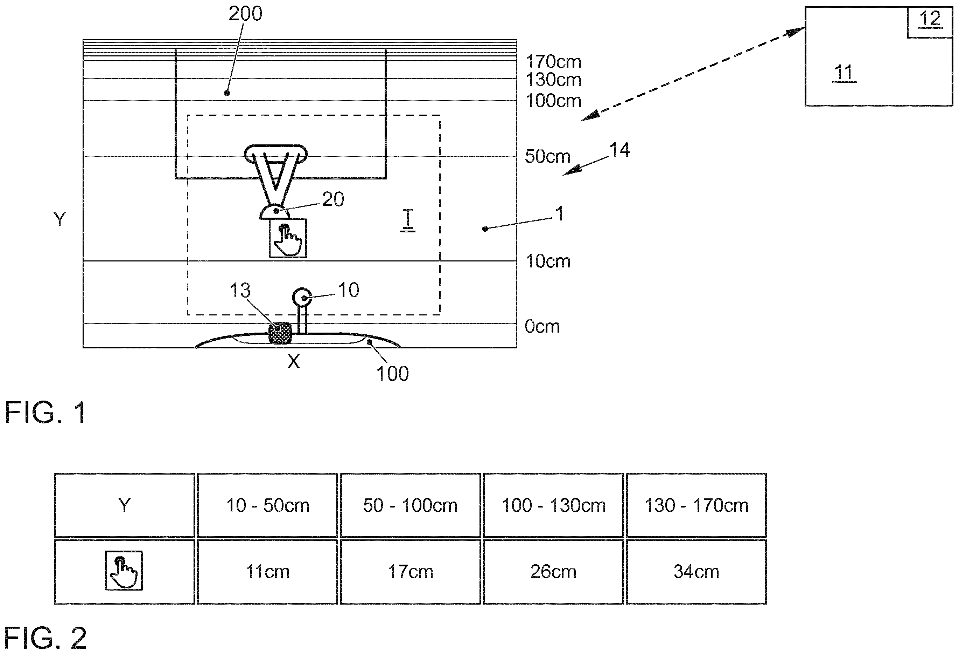

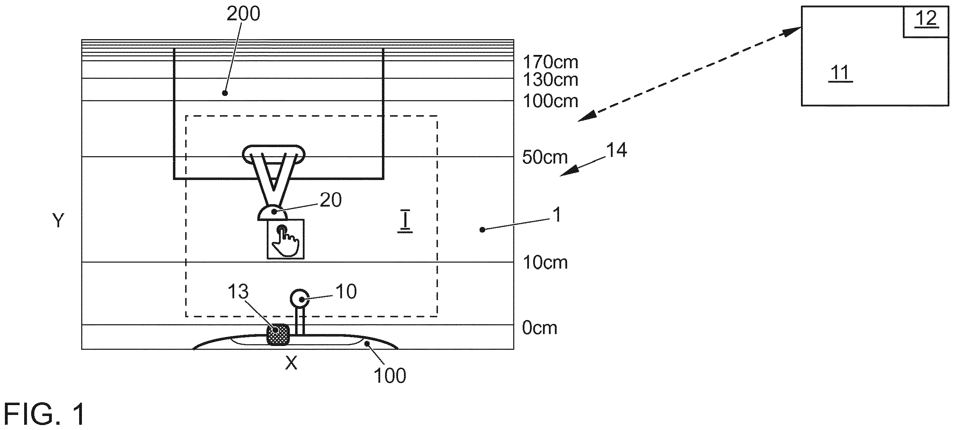

Die Figur 1 zeigt dabei ein erstes Bild 1 einer Deichsel 20 eines Anhängers 200 auf einem Display 14, welches in einem Kraftfahrzeug 100 beispielsweise in einem Armaturenbrett des Kraftfahrzeuges 100 angeordnet sein kann. Das Display 14 kann dabei Bilder von einer Kamera 13, beispielsweise einer Rückfahrkamera 13, des Kraftfahrzeuges 100 darstellen. Die Rückfahrkamera 13 kann hierbei Bilder von einem hinteren Bereich des Kraftfahrzeuges 100 aufnehmen. Wenn das Kraftfahrzeug 100 hinten zu der Deichsel 20 des Anhängers 200 ausgerichtet ist, wird die Deichsel 20 im Display 14 angezeigt. Das Display 14 kann somit helfen, ein Navigieren einer Anhängerkupplung 10 des Kraftfahrzeuges 100 an die Deichsel 20 des Anhängers 200 zum Ankuppeln des Anhängers 200 an das Kraftfahrzeug 100 zu erleichtern. Um die Deichsel 20 mit der Anhängerkupplung 10 des Kraftfahrzeuges 100 zielgerichtet zu treffen, kann ein Benutzer händisch, meistens mit einem Finger, die Deichsel 20 am Display 14 berühren und somit markieren. Die Markierung ist notwendig, um eine Trajektorie bzw. einen Anschlagwinkel zum richtigen Anfahren der Deichsel 20 zu bestimmen. Beim händischen Markieren der Deichsel 20 am Display 14 können sich jedoch hohe Toleranzen ergeben, wie es nachfolgend anhand einer Tabelle in der Figur 2 erklärt wird.

Ein Finger weist eine durchschnittliche Breite von ca. 1 cm auf. Eine solche Markierung deckt in unterschiedlichen Höhen am Display 14, die den unterschiedlichen Entfernungen von der Kamera 13 in der Realität entsprechen, unterschiedlich große Bereiche in der Realität ab. Erfindungsgemäß wurde festgestellt, dass ein zielgerichtetes Ankuppeln des Kraftfahrzeuges 100 an den Anhänger 200 stark von der koordinatenabhängigen Treffergenauigkeit für die Deichsel 20 in unterschiedlichen Bereichen eines im Display 14 angezeigten Bildes abhängig ist. Die koordinatenabhängige Treffergenauigkeit für die Deichsel 20 in unterschiedlichen Bereichen eines Bildes bedeutet im Sinne der Erfindung eine Zuordnung einem zweidimensionalen Koordinatensystem Y, X des Displays 14 einer zusätzlichen Koordinate, die der Entfernung von der Kamera 13 zu einem aufzunehmenden Punkt in der Realität entspricht. Je weiter der aufzunehmende Punkt in der Realität von der Kamera 13 ist, desto größer wird der Bereich in der Realität, der mit dem Finger des Benutzers am Display 14 markiert wird.

Die Figur 2 zeigt dabei beispielhafte Treffergenauigkeiten für mehrere Bereiche auf dem Display 14. Die mehreren Bereiche werden dabei zwischen mehreren Linien definiert, die die Entfernung von der Kamera 13 zu einem aufzunehmenden Punkt in der Realität darstellen und die horizontal im Display 14 angeordnet sind. Die mehreren Linien im Display 14 weisen unterschiedliche Höhen Y im zweidimensionalen Koordinatensystem X, Y des Displays 14 auf. Die unterste Linie entspricht dabei einer Entfernung von 0 cm von der Kamera 13, die nächste oberhalb liegende Linie einer Entfernung von 10 cm, die nächste Linie einer Entfernung von 50 cm, die nächste Linie einer Entfernung von 100 cm, die nächste Linie einer Entfernung von 130 cm, die nächste Linie einer Entfernung vom 170 cm usw.. Die Bereiche zwischen den Linien sind in der ersten Zeile in der Tabelle der Figur 2 angegeben. Die Figur 2 zeigt in der zweiten Zeile eine geschätzte Größe eines durch eine Fingerbreite eines Benutzers von ca. 1 cm abzudeckenden Bereichs, welcher in der Realität in Abhängigkeit vom jeweiligen Bereich am Display 14 in der ersten Zeile angegeben ist. Hierbei ist es zusätzlich denkbar, dass die tatsächliche Fingerbreite eines Benutzers aktiv am Display 14 erfasst und durch eine Elektronikeinheit 11 berücksichtigt werden kann, um den abzudeckenden Bereich in der Realität an die wirkliche Fingerbreite des Benutzers anzupassen. Die Tabelle der Figur 2 dient dabei lediglich als Beispiel für die Fingerbreite des Benutzers von ca. 1 cm. Das Display 14 kann unterschiedliche Größen und/oder unterschiedliche Pixelauflösungen aufweisen, die durch die Elektronikeinheit 11 berücksichtigt werden können. Die Daten aus der Tabelle der Figur 2 sind beispielhaft für ein Display 14 angegeben, welches 9,2" messen und welches eine Auflösung von 1280x640 Pixel aufweisen kann. Dabei ist es ersichtlich, dass mit der steigernden Höhe Y im zweidimensionalen Koordinatensystem X, Y des Displays 14 der abzudeckende Bereich in der Realität immer größer wird, wodurch die Treffergenauigkeit der Deichsel 20 am Display 14 immer kleiner wird. Folglich wird mit der steigernden Entfernung von der Kamera 13 die zielgerichtete Ansteuerung der Anhängerkupplung 10 an die Deichsel 20 immer schwieriger.

Im Beispiel der Figur 1 befindet sich die Deichsel 20 in einer Entfernung zwischen 10 cm und 50 cm von der Kamera 13. Dies entspricht einem Abdeckbereich von ca. 17 cm für ein 9,2" großes Display 14. Wenn der Kugelkopf der Anhängerkupplung 10 ca. 5 cm groß ist, so ist der Bereich von 17 cm offensichtlich zu groß, um die Deichsel 20 genau im Display 14 zu markieren. Folglich kann ein Ankupellversuch sogar scheitern.

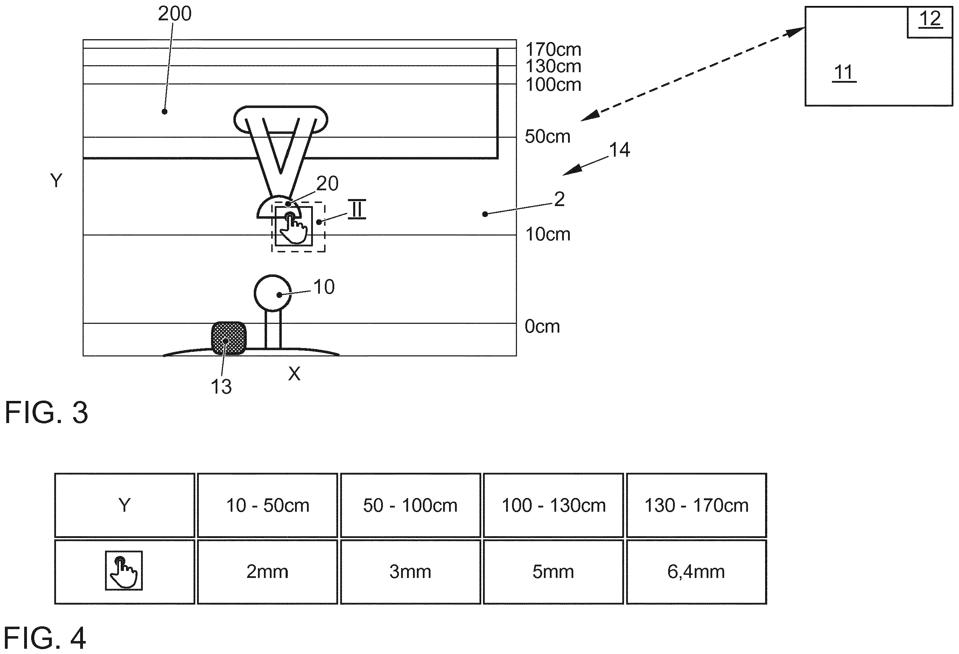

Um die Treffergenauigkeit für die Deichsel 20 am Display 14 zu erhöhen, wird erfindungsgemäß mindestens ein zweites Bild 2 von der Deichsel 20 des Anhängers 200 berücksichtigt. Das erste Bild 1 aus der Figur 1 dient somit erfindungsgemäß lediglich zu einer vorläufigen Markierung der Deichsel 20 bzw. zu einem vorläufigen Auswählen eines ersten Bereichs I im ersten Bild 1, in welchem die Deichsel 20 liegen soll. Der erste Bereich I wird dabei perspektivisch rund um den Finger des Benutzers ausgewählt. Danach wird automatisch in den vergrößerten ersten Bereich I hineingezoomt. Die Figur 3 zeigt schließlich das zweite Bild 2, welches eine Vergrößerung des ersten Bereichs I auf eine entsprechende Displaygröße darstellt. Im zweiten Bild 2 kann der Benutzer die Deichsel 20 erfindungsgemäß genauer markieren als im ersten Bild 1. Im vergrößerten zweiten Bild 2 ist die Abhängigkeit von der Entfernung zu der Kamera 13 und dem abzudeckenden Bereich in der Realität kleiner als im ersten Bild 1.

Die Figur 4 zeigt ferner beispielhafte Treffergenauigkeiten für mehrere Bereiche auf dem Display 14, die zwischen horizontalen Linien in der Figur 3 angedeutet sind und in unterschiedlichen Höhen Y im zweiten Bild 2 liegen. Unterschiedliche Höhen Y im zweiten Bild 2 entsprechen unterschiedlichen Entfernungen von der Kamera 13 zum aufzunehmenden Punkt. Die unterste Linie entspricht dabei einer Entfernung von 0 cm, die nächste oberhalb liegende Linie einer Entfernung von 10 cm, die nächste Linie einer Entfernung von 50 cm, die nächste Linie einer Entfernung von 100 cm, die nächste Linie einer Entfernung von 130 cm und die oberste Linie einer Entfernung vom 170 cm. Die Bereiche zwischen den Linien sind in der ersten Zeile in der Tabelle der Figur 4 angegeben. Die Figur 2 zeigt in der zweiten Zeile schließlich eine geschätzte Größe eines abzudeckenden Bereichs, in der Realität für eine Fingerbreite, die nunmehr im vergrößerten zweiten Bild 2 nur noch ca. einem Pixel entspricht. Mit Hilfe der Figur 4 ist es somit ersichtlich, dass im vergrößerten zweiten Bild 2 der abzudeckende Bereich in Realität sogar mit der steigernden Entfernung von der Kamera 13 zur Deichsel 20 kleiner ist als im ersten Bild 1. Somit kann der Vorteil erreicht werden, dass der Benutzer mit einer hohen Genauigkeit die Deichsel 20 im zweiten Bild 2 markieren kann als im ersten Bild 1, wodurch ein Anfahrmanöver zum Ankuppeln des Kraftfahrzeuges 100 an den Anhänger 200 zielgerichteter ausgeführt werden kann als mit Hilfe nur des ersten Bildes 1.

Das zweite Bild 2, welches dem hineingezoomten ersten Bereich I entspricht, dient somit dazu, um eine Korrektur der Markierung der Deichsel 20 vorzunehmen. Dadurch wird eine genauere Markierung der Deichsel 20 ermöglicht. Nach dem Hineinzoomen kann eine Fingerbreite des Benutzers von ca. 1 cm nur ein Pixel im zweiten Bild 2 auswählen, welches einem Bereich in der Realität von ca. 2 mm bei einem 10 - 50 cm großen Abstand im Kamerabild, ca. 3 mm bei einem 50 - 100 cm großen Abstand, ca. 5 mm bei einem 100 - 130 cm Abstand und ca. 6,4 mm bei einem 1,30 m - 1,70 m Abstand. Ein 5 cm großer Kugelkopf der Anhängekupplung 10 kann folglich genauer an die ausgewählte Deichsel 20 angefahren werden.

Der zweite Bereich II wird in der Figur 3 als ein kleines Quadrat um den Finger eines Benutzers dargestellt. Der zweite Bereich II denkt dabei die Deichsel mit einer vergrößerten Genauigkeit als der erste Bereich I aus der Figur 1 ab. Der zweite Bereich II überlagert dabei die Deichsel 20 und kann als ein richtiger Zielpunkt zum Anfahren der Anhängerkupplung 10 des Kraftfahrzeuges 100 an die Deichsel 20 des Anhängers 200 benutzt werden. Folglich wird mit Hilfe des Bildes 2 die Markierung der Deichsel am Display 14 leichter und genauer, wodurch auch die zielgerichtete Ansteuerung der Anhängerkupplung 10 an die Deichsel 20 einfacher und präzisier wird.

Weiterhin kann mit Hilfe der erkannten Deichsel 20 im Display 14 ihre Position in der Realität abgeschätzt und eine genaue Trajektorie und/oder ein bestimmter Einschlagwinkel des Kraftfahrzeuges 100 zum Ankuppeln des Anhängers 200 berechnet werden. Diese Trajektorie kann ferner am Display 14 visualisiert werden. Schließlich kann das Kraftfahrzeug 100 automatisch zum Ankuppeln an den Anhänger 200 navigiert werden, beispielsweise durch einen im Einparkhilfeassistent integrierten erfindungsgemäßen Ankuppelassistent. Alternativ kann die am Display 14 angezeigte Trajektorie als Navigationshilfe für den Benutzer dienen, um das Kraftfahrzeug 100 manuell zum Ankuppeln an den Anhänger 200 anzusteuern.

Erfindungsgemäß kann ein entsprechendes Assistenzverfahren zum Ankuppeln des Kraftfahrzeuges 100 an den Anhänger 200 mit Hilfe eines Ankuppelassistenten ausgeführt werden. Der Ankuppelassistent kann dabei über eine spezielle Elektronikeinheit 11 verfügen, die mit dem Display 14 kommunizieren kann und die die erfindungsgemäßen Verfahrensschritte, die oben beschrieben wurden, ausführen kann.

Die voranstehende Beschreibung der Figuren 1 bis 4 beschreibt die vorliegende Erfindung ausschließlich im Rahmen von Beispielen. Selbstverständlich können einzelne Merkmale der Ausführungsformen, sofern es technisch sinnvoll ist, frei miteinander kombiniert werden, ohne den Rahmen der Erfindung zu verlassen. Dabei können beispielsweise noch weitere Bilder aufgenommen und entsprechend noch weitere Bereiche zwecks Bestimmung der richtigen Position der Deichsel 20 am Display 14 ausgewählt werden. Alternativ zu einem manuellen Antippen des Displays 14 mit einem Finger, kann eine Bilderkennungseinheit 12 zum Auswählen eines ersten Bereiches I und/oder eines zweiten Bereiches II in der Elektronikeinheit 11 vorgesehen sein. Somit kann die Erkennung der Deichsel 20 im Kamerabild automatisiert werden. Gleichwohl ist es aber auch denkbar, dass zum Auswählen der Deichsel 20 im ersten Bild 1 und/oder im zweiten Bild 2 sowohl die Bilderkennungseinheit 12 als auch der Benutzer herangezogen werden können, um ein kombiniertes Assistenzverfahren zu realisieren. Hierbei ist es denkbar, dass der Benutzer die automatische Auswahl der Deichsel 20 durch die Bilderkennungseinheit 12 manuell verifizieren kann und/oder eine von mehreren erkannten Deichseln 20 auswählen kann, wenn die Bilderkennungseinheit 12 die richtige Deichsel 20 von den anderen nicht unterscheiden kann.

### Bezugszeichenliste

- 1: erstes Bild
- 2: zweites Bild

- 10: Anhängerkupplung
- 11: Elektronikeinheit
- 12: Bilderkennungseinheit
- 13: Kamera
- 14: Display

- 20: Deichsel

- 100: Kraftfahrzeug

- 200: Anhänger

- I: erster Bereich
- II: zweiter Bereich

## Patentansprüche

1. Assistenzverfahren zum Ankuppeln eines Kraftfahrzeuges (100) an einen Anhänger (200),
wobei das Kraftfahrzeug (100) mit einer Anhängerkupplung (10), mindestens einer Kamera (13), einem Display (14) und einer Elektronikeinheit (11) ausgeführt ist, wobei der Anhänger (200) mit einer Deichsel (20) für die Anhängerkupplung (10) ausgeführt ist,
umfassend folgende Schritte:
a) Erfassen eines ersten Bildes (1) von zumindest einer Deichsel (20) eines Anhängers (200) durch die Kamera (13),
b) Anzeigen des ersten Bildes (1) auf dem Display (14),
c) Auswählen eines ersten Bereichs (I) im ersten Bild (1), in welchem die Deichsel (20) liegt, wobei dem ersten Bereich (I) eine koordinatenabhängige Treffergenauigkeit für die Deichsel (20) zugeordnet wird,
d) Vergrößern des ausgewählten ersten Bereichs (I), um ein zweites Bild (2) herzustellen,
e) Anzeigen des zweiten Bildes (2) auf dem Display (14),
f) Auswählen eines zweiten Bereichs (II) im zweiten Bild (2), in welchem die Deichsel (20) liegt, wobei dem zweiten Bereich (II) eine höhere koordinatenabhängige Treffergenauigkeit für die Deichsel (20) zugeordnet wird als dem ersten Bereich,
g) Bestimmen einer Trajektorie des Kraftfahrzeuges (100) zum Ankuppeln des Anhängers (200) unter der Annahme, dass die Deichsel (20) sich im zweiten Bereich (II) befindet,
und wobei im Schritt c) und im Schritt f) ein Benutzer aufgefordert wird, zu bestätigen, dass die Deichsel (20) im ersten Bereich (I) und/oder im zweiten Bereich (II) liegt.

2. Assistenzverfahren nach Anspruch 1,
**dadurch gekennzeichnet,**
**dass** im Schritt c) und/oder im Schritt f) ein Benutzer die Deichsel (20) im ersten Bild (1) und/oder im zweiten Bild (2) mit einem Finger markiert, um den ersten Bereich (I) und/oder den zweiten Bereich (II) auszuwählen.

3. Assistenzverfahren nach Anspruch 1 oder 2,
**dadurch gekennzeichnet,**
**dass** im Schritt c) und/oder im Schritt f) die Deichsel (20) im ersten Bild (1) und/oder im zweiten Bild (2) durch eine Bilderkennungseinheit (12) bestimmt wird, um den ersten Bereich (I) und/oder den zweiten Bereich (II) auszuwählen.

4. Assistenzverfahren nach einem der vorhergehenden Ansprüche,
**dadurch gekennzeichnet,**
**dass** im Schritt g) beim Bestimmen der Trajektorie des Kraftfahrzeuges (100) zum Ankuppeln des Anhängers (200) die koordinatenabhängige Treffergenauigkeit für die Deichsel (20) im zweiten Bereich (II) berücksichtigt wird.

5. Assistenzverfahren nach einem der vorhergehenden Ansprüche,
**dadurch gekennzeichnet,**
**dass** das Verfahren mindestens einen weiteren Schritt aufweist:
h) Anzeigen der im Schritt g) bestimmten Trajektorie auf dem Display (14).

6. Assistenzverfahren nach einem der vorhergehenden Ansprüche,
**dadurch gekennzeichnet,**
**dass** das Verfahren mindestens einen weiteren Schritt aufweist:
h) Automatisches Navigieren des Kraftfahrzeuges (100) zum Ankuppeln des Anhängers (200) gemäß der im Schritt g) bestimmten Trajektorie.

7. Ankuppelassistent für ein Kraftfahrzeug (100) mit einer Anhängerkupplung (10), umfassend
mindestens eine Kamera (13),
ein Display (14), und
eine Elektronikeinheit (11),
**dadurch gekennzeichnet,**
**dass** die Elektronikeinheit (11) dazu ausgelegt ist, eine Trajektorie des Kraftfahrzeuges (100) zum Ankuppeln eines Anhängers (200) gemäß einem Assistenzverfahren nach Anspruch 1 zu bestimmen, wobei beim Bestimmen der Trajektorie eine koordinatenabhängige Treffergenauigkeit für eine Deichsel (20) des Anhängers (200) in mindestens einem durch die Kamera (13) aufgenommen und auf dem Display (10) angezeigten Bereich (I, II) berücksichtigt wird, in welchem die Deichsel (20) des Anhängers (200) liegt.

8. Ankuppelassistent nach Anspruch 7,
**dadurch gekennzeichnet,**
**dass** das Display (14) ein Touch-Display ist, welches als eine Schnittstelle zwischen einem Benutzer und dem Ankuppelassistent dient,
und/oder dass die Kamera (13) eine Rückfahrkamera ist.

9. Ankuppelassistent nach Anspruch 7 oder 8,
**dadurch gekennzeichnet,**
**dass** die Elektronikeinheit (11) eine Bilderkennungseinheit (12) aufweist, um die Deichsel (20) in mindestens einem durch die Kamera (13) aufgenommen und auf dem Display (14) angezeigten Bereich (I, II) automatisch aufzufinden,
und/oder dass das Ankuppelassistent in einem Einparkhilfeassistent des Kraftfahrzeuges integrierbar ist.

## Claims

1. Assist method for coupling a motor vehicle (100) to a trailer (200),
wherein the motor vehicle (100) is embodied with a trailer coupling (10), at least one camera (13), a display (14) and an electronic unit (11),
wherein the trailer (200) is embodied with a tow bar (20) for the trailer coupling (10),
said method comprising the following steps:
a) capturing a first image (1) of at least one tow bar (20) of a trailer (200) by means of the camera (13),
b) displaying the first image (1) on the display (14),
c) selecting a first region (I) in the first image (1) in which the tow bar (20) is located, wherein a coordinate-dependent locating accuracy for the tow bar (20) is allocated to the first region (I),
d) enlarging the selected first region (I) in order to produce a second image (2),
e) displaying the second image (2) on the display (14),
f) selecting a second region (II) in the second image (2) in which the tow bar (20) is located, wherein an increased coordinate-dependent locating accuracy for the tow bar (20) is allocated to the second region (II) than to the first region,
g) determining a trajectory of the motor vehicle (100) for coupling the trailer (200) assuming that the tow bar (20) is located in the second region (II),
and wherein in step c) and in step f) a user is prompted to confirm that the tow bar (20) is located within the first region (I) and/or within the second region (II).

2. Assist method according to Claim 1,
**characterized**
**in that** in step c) and/or in step f) a user marks the tow bar (20) in the first image (1) and/or in the second image (2) using a finger in order to select the first region (I) and/or the second region (II).

3. Assist method according to Claim 1 or 2,
**characterized**
**in that** in step c) and/or in step f) the tow bar (20) is determined in the first image (1) and/or in the second image (2) by means of an image recognition unit (12) in order to select the first region (I) and/or the second region (II).

4. Assist method according to one of the preceding claims,
**characterized**
**in that** in step g) when determining the trajectory of the motor vehicle (100) for coupling the trailer (200), the coordinate-dependent locating accuracy for the tow bar (20) in the second region (II) is taken into account.

5. Assist method according to one of the preceding claims,
**characterized**
**in that** the method comprises at least one further step: h) displaying the trajectory that is determined in step g) on the display (14).

6. Assist method according to one of the preceding claims,
**characterized**
**in that** the method comprises at least one further step:
h) automatically navigating the motor vehicle (100) to couple the trailer (200) in accordance with the trajectory that is determined in step g).

7. Coupling assist device for a motor vehicle (100) having a trailer coupling (10), comprising
at least one camera (13),
a display (14), and
an electronic unit (11),
**characterized**
**in that** the electronic unit (11) is embodied for the purpose of determining a trajectory of the motor vehicle (100) for coupling a trailer (200) in accordance with an assist method according to Claim 1, wherein when determining the trajectory a coordinate-dependent locating accuracy for a tow bar (20) of the trailer (200) is taken into account in at least one region (I, II) in which the tow bar (20) of the trailer (200) is located, said region being recorded by means of the camera (13) and displayed on the display (10).

8. Coupling assist device according to Claim 7,
**characterized**
**in that** the display (14) is a touch display that is used as an interface between a user and the coupling assist device,
and/or in that the camera (13) is a rear-view camera.

9. Coupling assist device according to Claim 7 or 8,
**characterized**
**in that** the electronic unit (11) comprises an image recognition unit (12) in order to automatically find the tow bar (20) in at least one region (I, II) that is recorded by means of the camera (13) and displayed on the display (14),
and/or in that the coupling assist device can be integrated into a parking assist device of the motor vehicle.

## Revendications

1. Procédé d'assistance pour atteler un véhicule automobile (100) à une remorque (200),
le véhicule automobile (100) étant réalisé avec une attache de remorque (10), au moins une caméra (13), un dispositif d'affichage (14) et une unité électronique (11),
la remorque (200) étant réalisée avec un timon (20) pour l'attache de remorque (10),
comprenant les étapes suivantes :
a) capture d'une première image (1) d'au moins un timon (20) d'une remorque (200) par la caméra (13),
b) affichage de la première image (1) sur le dispositif d'affichage (14),
c) sélection d'une première zone (I) dans la première image (1), dans laquelle se trouve le timon (20), une précision de concordance dépendante de coordonnées pour le timon (20) étant associée à la première zone (I),
d) grossissement de la première zone (I) sélectionnée afin de créer une deuxième image (2),
e) affichage de la deuxième image (2) sur le dispositif d'affichage (14),
f) sélection d'une deuxième zone (II) dans la deuxième image (2), dans laquelle se trouve le timon (20), une précision de concordance dépendante de coordonnées pour le timon (20) supérieure à celle de la première zone étant associée à la deuxième zone (II),
g) détermination d'une trajectoire du véhicule automobile (100) pour atteler la remorque (200) avec pour hypothèse que le timon (20) se trouve dans la deuxième zone (II),
et dans l'étape c) ainsi que dans l'étape f), un utilisateur étant invité à confirmer que le timon (20) se trouve dans la première zone (I) et/ou dans la deuxième zone (II).

2. Procédé d'assistance selon la revendication 1, **caractérisé en ce que** dans l'étape c) et/ou dans l'étape f), un utilisateur marque le timon (20) avec un doigt dans la première image (1) et/ou dans la deuxième image (2) afin de sélectionner la première zone (I) et/ou la deuxième zone (II).

3. Procédé d'assistance selon la revendication 1 ou 2, **caractérisé en ce que** dans l'étape c) et/ou dans l'étape f), le timon (20) dans la première image (1) et/ou dans la deuxième image (2) est déterminé par une unité de reconnaissance d'image (12) dans la première image (1) et/ou dans la deuxième image (2).

4. Procédé d'assistance selon l'une des revendications précédentes, **caractérisé en ce que** dans l'étape g), lors de la détermination d'une de la trajectoire du véhicule automobile (100) pour atteler la remorque (200), la précision de concordance dépendante de coordonnées pour le timon (20) dans la deuxième zone (II) est prise en compte.

5. Procédé d'assistance selon l'une des revendications précédentes, **caractérisé en ce que** le procédé comprend au moins une étape supplémentaire :
h) affichage sur le dispositif d'affichage (14) de la trajectoire déterminée à l'étape g).

6. Procédé d'assistance selon l'une des revendications précédentes, **caractérisé en ce que** le procédé comprend au moins une étape supplémentaire :
h) navigation automatique du véhicule automobile (100) en vue de l'attelage de la remorque (200) conformément à la trajectoire déterminée à l'étape g).

7. Assistant d'attelage pour un véhicule automobile (100) pourvu d'une attache de remorque (10), comprenant au moins une caméra (13),
un dispositif d'affichage (14) et
une unité électronique (11),
**caractérisé en ce**
**que** l'unité électronique (11) est conçue pour déterminer une trajectoire du véhicule automobile (100) pour atteler la remorque (200) conformément à un procédé d'assistance selon la revendication 1, une précision de concordance dépendante de coordonnées pour un timon (20) de la remorque (200), dans au moins une zone (I, II) capturée par la caméra (13) et affichée sur le dispositif d'affichage (14), dans laquelle se trouve le timon (20) de la remorque (200), étant prise en compte lors de la détermination de la trajectoire.

8. Assistant d'attelage selon la revendication 7, **caractérisé en ce que** le dispositif d'affichage (14) est un écran tactile qui sert d'interface entre un utilisateur et l'assistant d'attelage, et/ou **en ce que** la caméra (13) est une caméra de recul.

9. Assistant d'attelage selon la revendication 7 ou 8, **caractérisé en ce que** l'unité électronique (11) possède une unité de reconnaissance d'image (12) afin de rechercher automatiquement le timon (20) dans au moins une zone (I, II) capturée par la caméra (13) et affichée sur le dispositif d'affichage (14), et/ou **en ce que** l'assistant d'attelage peut être intégré dans un assistant au stationnement du véhicule automobile.
